# EUROPEAN PATENT APPLICATION

(11) **EP 3 719 175 A1**
(43) Date of publication of application: **07.10.2020**
(21) Application number: 19209729.3
(22) Date of filing: 18.11.2019
(51) Int. Cl.: C25B 1/10, C25B 11/04, C25B 15/08, A62C 3/08, A62C 99/00, C25B 15/02, H01M 8/18, C25B 9/10, H01M 4/90, H01M 4/92, H01M 8/086, H01M 8/1018, H01M 8/0656

(54) **CATALYTIC ELECTROCHEMICAL INERT GAS AND POWER GENERATING SYSTEM AND METHOD**

(30) Priority: 04.04.2019 US 201916375639
(71) Applicant: Hamilton Sundstrand Corporation, Charlotte, NC 28217-4578 (US)
(72) Inventor: RHEAUME, Jonathan, West Hartford, CT Connecticut 06119 (US); EMERSON, Sean C., Broad Brook, CT Connecticut 06016 (US); PERRY, Michael L., Glastonbury, CT Connecticut 06033 (US)
(74) Representative: Dehns

(57) **Abstract**

A system produces inert gas and generates electrical power with an electrochemical cell (10) with an anode (16) and a cathode (14) separated by a proton transfer medium separator (12). The anode includes an oxygen evolution reaction catalyst and a hydrogen oxidation reaction catalyst, and the system is operated in alternate modes: a first mode in which water is electrolyzed at the anode with an oxygen evolution reaction catalyst to form protons and oxygen, the protons are transported across the separator to the cathode and reacted with oxygen at the cathode, and an inerting gas depleted of oxygen is discharged from the cathode; and a second mode in which protons and electrons are produced from a fuel at the anode with a hydrogen oxidation reaction catalyst, protons are transported across the separator to the cathode, and electrons are transported to the cathode through an electrical circuit to produce electrical power.

## Description

### BACKGROUND

The subject matter disclosed herein generally relates to systems for generating and providing inert gas, oxygen, and/or power such as may be used on vehicles (e.g., aircraft, military vehicles, heavy machinery vehicles, sea craft, ships, submarines, etc.) or stationary applications such as fuel storage facilities.

It is recognized that fuel vapors within fuel tanks can become combustible or explosive in the presence of oxygen. An inerting system decreases the probability of combustion or explosion of flammable materials in a fuel tank by maintaining a chemically non-reactive or inerting gas, such as nitrogen-enriched air, in the fuel tank vapor space, also known as ullage. Three elements are required to initiate combustion or an explosion: an ignition source (e.g., heat), fuel, and oxygen. The oxidation of fuel may be prevented by reducing any one of these three elements. If the presence of an ignition source cannot be prevented within a fuel tank, then the tank may be made inert by: 1) reducing the oxygen concentration, 2) reducing the fuel concentration of the ullage to below the lower explosive limit (LEL), or 3) increasing the fuel concentration to above the upper explosive limit (UEL). Many systems reduce the risk of oxidation of fuel by reducing the oxygen concentration by introducing an inerting gas such as nitrogen-enriched air (NEA) (i.e., oxygen-depleted air or ODA) to the ullage.

### BRIEF DESCRIPTION

A system is disclosed for providing inerting gas to a protected space and electrical power. The system includes an electrochemical cell comprising a cathode and an anode separated by a separator comprising a proton transfer medium. A cathode fluid flow path is in operative fluid communication with the cathode between a cathode fluid flow path inlet and a cathode fluid flow path outlet. An anode fluid flow path is in operative fluid communication with the anode between an anode fluid flow path inlet and an anode fluid flow path outlet. An air source is in operative fluid communication with the cathode fluid flow path inlet, and an inerting gas flow path is in operative fluid communication with the cathode fluid flow path outlet and the protected space. A water source is in controllable operative fluid communication with the anode fluid flow path inlet, and a fuel source is also in controllable operative fluid communication with the anode fluid flow path inlet. An electrical connection is in controllable communication between the electrochemical cell and a power sink, and between the electrochemical cell and a power source. The anode includes an oxygen evolution reaction catalyst and a hydrogen oxidation reaction catalyst. A controller is configured to alternatively operate the system in alternate modes of operation selected from a plurality of modes of operation. The plurality of modes of operation includes: (i) a first mode in which water is directed to the anode fluid flow path inlet, electric power is directed from the power source to the electrochemical cell to provide a voltage difference between the anode and the cathode, and an inerting gas is directed from the cathode fluid flow path outlet to the protected space; and (ii) a second mode in which the fuel is directed from the fuel source to the anode fluid flow path inlet and electric power is directed from the electrochemical cell to the power sink.

In some aspects, the cathode fluid flow path outlet is in operative fluid communication with the protected space in the second mode of operation.

In any one or combination of the foregoing aspects, the oxygen evolution reaction catalyst can include a metal oxide.

In any one or combination of the foregoing aspects, the metal oxide can include an oxide of a metal selected from iridium, ruthenium, nickel, platinum, lead, manganese oxide, titanium, cobalt(II,III), or iron(II,III), or combinations thereof.

In any one or combination of the foregoing aspects, the oxygen evolution reaction catalyst can be selected from iridium oxide, ruthenium oxide, nickel oxide, platinum oxide, lead oxide, manganese oxide, titanium oxide, cobalt(II,III) oxide, iron(II,III) oxide, or combinations thereof.

In any one or combination of the foregoing aspects, the oxygen evolution reaction catalyst can be selected from Ru02/Ir02, Pt-Ir02 nickel/iron, nickel/nickel oxide.

In any one or combination of the foregoing aspects, the oxygen evolution reaction catalyst can include a non-oxide metal.

In any one or combination of the foregoing aspects, the hydrogen oxidation reaction catalyst can include platinum, ruthenium, palladium, or combinations thereof.

In any one or combination of the foregoing aspects, the hydrogen oxidation reaction catalyst can include a nanoparticle morphology.

In any one or combination of the foregoing aspects, the catalysts at the anode can be unsupported.

In any one or combination of the foregoing aspects, the catalysts at the anode can be supported on a metal oxide.

In any one or combination of the foregoing aspects, the oxygen evolution reaction catalyst and the hydrogen oxidation reaction catalyst can be disposed at different regions of the anode.

In any one or combination of the foregoing aspects, the oxygen evolution reaction catalyst and the hydrogen oxidation reaction catalyst can be intermixed at the anode.

In any one or combination of the foregoing aspects, the system can further include a liquid-gas separator including an inlet in operative fluid communication with the anode fluid flow path outlet and a liquid outlet in operative fluid communication with the anode fluid flow path inlet.

In any one or combination of the foregoing aspects, the system can be disposed on-board an aircraft.

In any one or combination of the foregoing aspects, the system can be disposed on-board an aircraft, with the liquid-gas separator including a gas outlet in operative fluid communication with a pressurized area of the aircraft or an occupant breathing system.

In any one or combination of the foregoing aspects, the controller can be configured to operate the system in the first mode continuously or at intervals under normal aircraft operating conditions, and to operate the system in the second mode in response to a demand for emergency electrical power.

Also disclosed is a method of producing inert gas and generating electrical power with an electrochemical cell comprising an anode and a cathode separated by a separator comprising a proton transfer medium. According to the method, the system is operated in a first mode in which water is electrolyzed at the anode with an oxygen evolution reaction catalyst to form protons and oxygen, the protons are transported across the separator to the cathode and reacted with oxygen at the cathode, and an inerting gas depleted of oxygen is discharged from the cathode. The system is also operated in a second mode in which protons and electrons are produced from a fuel at the anode with a hydrogen oxidation reaction catalyst, protons are transported across the separator to the cathode, and electrons are transported to the cathode through an electrical circuit to produce electrical power.

According to some aspects, the method can further include discharging an inerting gas depleted of oxygen from the cathode in the second mode of operation.

According to some aspects, the method can further include operating the system on-board an aircraft and directing oxygen discharged from the anode to a pressurized area of the aircraft or to an occupant breathing system.

### BRIEF DESCRIPTION OF THE DRAWINGS

The following descriptions should not be considered limiting in any way. With reference to the accompanying drawings, like elements are numbered alike:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic depiction an example embodiment of an electrochemical cell; and
FIG. 3 is a schematic illustration of an example embodiment of an electrochemical inert gas generating system.

### DETAILED DESCRIPTION

A detailed description of one or more embodiments of the disclosed apparatus and method are presented herein by way of exemplification and not limitation with reference to the Figures.

Although shown and described above and below with respect to an aircraft, embodiments of the present disclosure are applicable to on-board systems for any type of vehicle or for on-site installation in fixed systems. For example, military vehicles, heavy machinery vehicles, sea craft, ships, submarines, etc., may benefit from implementation of embodiments of the present disclosure. For example, aircraft and other vehicles having fire suppression systems, emergency power systems, and other systems that may electrochemical systems as described herein may include the redundant systems described herein. As such, the present disclosure is not limited to application to aircraft, but rather aircraft are illustrated and described as example and explanatory embodiments for implementation of embodiments of the present disclosure.

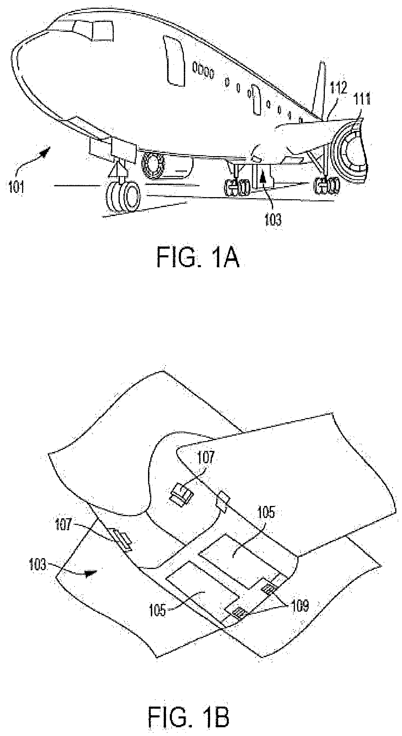

As shown in FIGS. 1A-1B, an aircraft includes an aircraft body 101, which can include one or more bays 103 beneath a center wing box. The bay 103 can contain and/or support one or more components of the aircraft 101. For example, in some configurations, the aircraft can include environmental control systems (ECS) and/or on-board inerting gas generation systems (OBIGGS) within the bay 103. As shown in FIG. 1B, the bay 103 includes bay doors 105 that enable installation and access to one or more components (e.g., OBIGGS, ECS, etc.). During operation of environmental control systems and/or fuel inerting systems of the aircraft, air that is external to the aircraft can flow into one or more ram air inlets 107. The outside air may then be directed to various system components (e.g., environmental conditioning system (ECS) heat exchangers) within the aircraft. Some air may be exhausted through one or more ram air exhaust outlets 109.

Also shown in FIG. 1A, the aircraft includes one or more engines 111. The engines 111 are typically mounted on the wings 112 of the aircraft and are connected to fuel tanks (not shown) in the wings, but may be located at other locations depending on the specific aircraft configuration. In some aircraft configurations, air can be bled from the engines 111 and supplied to OBIGGS, ECS, and/or other systems, as will be appreciated by those of skill in the art.

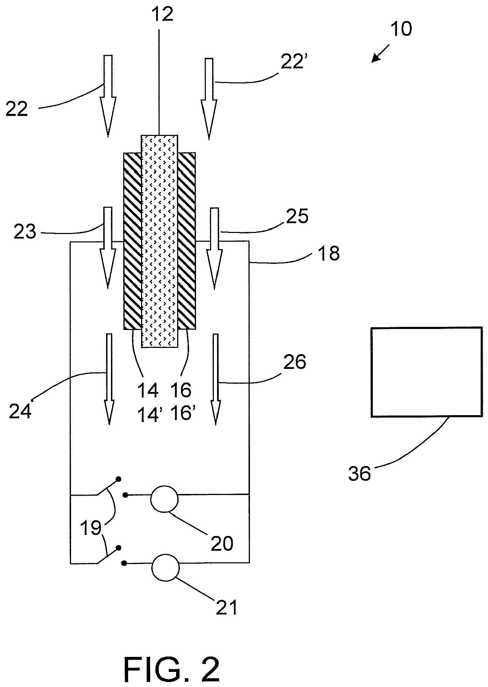

Referring now to FIG. 2, an electrochemical cell is schematically depicted. The electrochemical cell 10 comprises a separator 12 that includes an ion transfer medium. As shown in FIG. 2, the separator 12 has a cathode 14 disposed on one side and an anode 16 disposed on the other side. Cathode 14 can be fabricated from catalytic materials suitable for performing the needed electrochemical reaction (i.e., the oxygen-reduction reaction ("ORR") at the cathode).

As disclosed hereinabove, in some embodiments, the anode 16 includes an oxygen evolution reaction (OER) catalyst and a hydrogen oxidation reaction (HOR) catalyst.

An OER catalyst promotes the reaction formula

H₂O → ½O₂ + 2H⁺ + 2e⁻ (1),

which has an equilibrium potential of 1.23 volts versus standard hydrogen electrode (SHE). The ORR catalyst promotes the reverse reaction; namely:

½O₂ + 2H⁺ + 2e⁻ → H₂O (2).

The theoretical equilibrium potential of the OER is 1.23 volts relative to a standard hydrogen electrode (SHE). The resting cell potential is therefore zero volts. However, in practice, water molecules cannot be electrochemically split with application of a potential of the theoretical equilibrium potential of 1.23 volts, and a greater potential must typically be applied. Similarly, the ORR does not proceed at a significant rate unless the ORR-electrode potential is significantly less than the theoretical potential. The additional potential that must be applied to drive the reaction is referred to as overpotential. For purposes of this disclosure, an OER catalyst for a PEM electrochemical cell can be characterized by an overpotential of less than or equal to 0.3 V at a current density of 0.3 A/cm². In some embodiments, the OER catalyst can be characterized by an overpotential of less than or equal to 0.5 V, or can be characterized by an overpotential of less than or equal to 0.4 V, in each case at the same current density mentioned above. These overpotentials are typical with a cell operating temperature of 50-80°C, and can be higher at lower operating temperatures. In some embodiments the OER catalyst can include a metal oxide, e.g., an oxide of a platinum-group metal (e.g., platinum, palladium, rhodium, iridium, ruthenium, osmium). In some embodiments, the OER catalyst can include an oxide of a metal selected from iridium, ruthenium, nickel, platinum, lead, manganese oxide, titanium, cobalt(II,III), or iron(II,III), or combinations thereof. It should be noted that when the electrode is operated as a HOR electrode these oxides will be reduced, due to the much lower electrochemical potential, and will temporarily not be in the oxide form. In some embodiments, an OER catalyst can be selected from RuO₂/IrO₂, Pt-IrO₂ nickel/iron, nickel/nickel oxide. In some embodiments, the OER catalyst can be comprised of nanoparticles (i.e., particle sizes of 3 nm to 10 nm, and more preferably 4 nm to 5 nm) to maximize surface area of the catalyst per weight of the metal.

An HOR catalyst promotes the reaction

H₂ → 2H⁺ + 2e (2),

which has an equilibrium potential of 0.0 Vs versus standard hydrogen electrode (SHE). In practice, hydrogen molecules cannot be electrochemically split at the thermodynamic potential at a finite rate, and the HOR electrode operates at a potential > 0 V SHE in practice. The additional potential that must be applied to drive the reaction is referred to as overpotential. For purposes of this disclosure, an HOR catalyst can be characterized by an overpotential of less than or equal to 0.1 V at a current density of 1 A/cm². In some embodiments, the HOR catalyst can be characterized by an overpotential of less than or equal to 80 mV, or can be characterized by an overpotential of less than or equal to 50 mV, in each case at the same current density mentioned above. These overpotentials are typical with a cell operating temperature of 50-80°C, and can be higher at lower operating temperatures. In some embodiments the HOR catalyst can include a metal catalyst, such as platinum. In some embodiments, an HOR catalyst can be selected from platinum, ruthenium, palladium. In some embodiments, the HOR catalyst can be comprised of nanoparticles to maximize surface area of the catalyst per weight of the metal (i.e., particle sizes of 3 nm to 10 nm, and more preferably 4 to 5 nm).

The anode catalysts described above can be supported or unsupported. In embodiments where the anode catalysts are supported, the support can be a metal oxide support such as alumina, or carbides such as TiC. Although carbon supports for catalysts are not necessarily excluded, carbon may not be desired as a support because it can be susceptible to oxidation at high potentials..

The cathode can include a catalyst to promote the oxygen-reduction reaction (ORR):

½O₂ + 2H⁺ + 2e⁻ → H₂O (3).

Exemplary catalytic materials for the oxygen-reduction reaction (ORR) include, but are not limited to: cobalt, nickel, platinum, palladium, rhodium, gold, tantalum, titanium, tungsten, tungsten carbide, , alloys thereof, or metal oxides, such as ruthenium dioxide and manganese dioxide, and the like, or nitrogen and/or phosphorus-doped carbon materials, as well as combinations of the foregoing materials.

Cathode 14 and anode 16, including catalyst 14' and catalyst 16', are positioned adjacent to, and preferably in contact with the separator 12 and can be porous metal layers deposited (e.g., by vapor deposition) onto the separator 12, or can have structures comprising discrete catalytic particles adsorbed onto a porous substrate that is attached to the separator 12. Alternatively, the catalyst particles can be deposited on high surface area powder materials (e.g., graphite or porous carbons for cathode catalysts or metal-oxide particles for anode or cathode catalysts) and then these supported catalysts may be deposited directly onto the separator 12 or onto a porous substrate that is attached to the separator 12. Adhesion of the catalytic particles onto a substrate may be by any method including, but not limited to, spraying, dipping, painting, imbibing, vapor depositing, combinations of the foregoing methods, and the like. Alternately, the catalytic particles may be deposited directly onto opposing sides of the separator 12. In either case, the cathode and anode layers 14 and 16 may also include a binder material, such as a polymer, especially one that also acts as an ionic conductor such as anion-conducting ionomers. In some embodiments, the cathode and anode layers 14 and 16 can be cast from an "ink," which is a suspension of supported (or unsupported) catalyst, binder (e.g., ionomer), and a solvent that can be in a solution (e.g., in water or a mixture of alcohol(s) and water) using printing processes such as screen printing or ink jet printing.

The cathode 14 and anode 16 can be controllably electrically connected by electrical circuit 18 to a controllable electric power system 20, which can include a power source (e.g., DC power rectified from AC power produced by a generator powered by a gas turbine engine used for propulsion or by an auxiliary power unit) and optionally a power sink 21. In some embodiments, the electric power system 20 can optionally include a connection to the electric power sink 21 (e.g., one or more electricity-consuming systems or components onboard the vehicle) with appropriate switching (e.g., switches 19), power conditioning, or power bus(es) for such on-board electricity-consuming systems or components, for operation in an alternative fuel cell mode.

With continued reference to FIG. 2, a cathode supply fluid flow path 22 directs gas from an air source (not shown) into contact with the cathode 14. Oxygen is electrochemically depleted from air along the cathode fluid flow path 23, and can be exhausted to the atmosphere or discharged as nitrogen-enriched air (NEA) (i.e., oxygen-depleted air, ODA) to an inerting gas flow path 24 for delivery to an on-board fuel tank (not shown), or to a vehicle fire suppression system associated with an enclosed space (not shown), or controllably to either or both of a vehicle fuel tank or an on-board fire suppression system. An anode fluid flow path 25 is configured to controllably receive an anode supply fluid from an anode supply fluid flow path 22'. The anode fluid flow path 25 includes water when the electrochemical cell is operated in an electrolytic mode to produce protons at the anode for proton transfer across the separator 12 (e.g., a proton transfer medium such as a proton exchange membrane (PEM) electrolyte or phosphoric acid electrolyte). Alternatively, the water can be provided (solely or in part) by the water generated on the cathode that crosses over through the separator to the anode.

The system is also configured for alternative operation in a fuel cell mode in which the anode fluid flow path 25 can be configured to controllably also receive fuel (e.g., hydrogen). During fuel cell operation, electrochemical oxidation of the fuel forms protons at the anode, which are transported across the separator 12 to the cathode 14, where they can be utilized to react with oxygen on the cathode fluid flow path 23 to form ODA as described above for operation in electrolytic mode. Control of fluid flow along these flow paths can be provided through conduits and valves (not shown), which can be controlled by a controller 36 including a programmable or programmed microprocessor including instructions for carrying out any or all of the operations described herein. The controller 36 can be in operative communications with valves, pumps, compressors, or other fluid flow components and with switches and other electrical system components to selectively operate the electrochemical cell in alternate modes. These control connections can be through wired electrical signal connections (not shown) or through wireless connections.

Exemplary materials from which the electrochemical proton transfer medium can be fabricated include proton-conducting ionomers and ion-exchange resins. Ion-exchange resins useful as proton conducting materials include hydrocarbon-and fluorocarbon-type resins. Fluorocarbon-type resins typically exhibit excellent resistance to oxidation by halogen, strong acids, and bases. One family of fluorocarbon-type resins having sulfonic acid group functionality is NAFION™ resins (commercially available from E. I. du Pont de Nemours and Company, Wilmington, Del.). Alternatively, instead of an ion-exchange membrane, the separator 12 can be comprised of a liquid electrolyte, such as sulfuric or phosphoric acid, which may preferentially be absorbed in a porous-solid matrix material such as a layer of silicon carbide or a polymer than can absorb the liquid electrolyte, such as poly(benzoxazole). These types of alternative "membrane electrolytes" are well known and have been used in other electrochemical cells, such as phosphoric-acid fuel cells.

During operation of a proton transfer electrochemical cell in the electrolytic mode, water at the anode undergoes an electrolysis reaction according to the formulae:

H₂O → ½O₂ + 2H⁺ + 2e⁻ (1)

Electricity for the electrolysis reaction is drawn from electrical circuit 18 powered by electric power source 20 connecting the positively charged anode 16 with the cathode 14. The hydrogen ions (i.e., protons) produced by this reaction migrate across the separator 12, where they react at the cathode 14 with oxygen in the cathode flow path 23 to produce water according to the formula

½O₂ + 2H⁺ + 2e⁻ → H₂O (3)

Removal of oxygen from cathode flow path 23 produces nitrogen-enriched air exiting the region of the cathode 14. The oxygen evolved at the anode 16 by the reaction of formula (1) is discharged as anode exhaust 26.

During operation of a proton transfer electrochemical cell in a fuel cell mode, fuel (e.g., hydrogen) at the anode undergoes an electrochemical oxidation according to the formulae below for different fuels:

H₂ → 2H⁺ + 2e⁻ (2)

The electrons produced by these reactions flow through electrical circuit 18 to provide electric power to the electric power sink 21. The hydrogen ions (i.e., protons) produced by these reactions migrate across the separator 12, where they react at the cathode 14 with oxygen in the cathode flow path 23 to produce water according to the formula (2).

½O₂ + 2H⁺ + 2e⁻ → H₂O (3)

Removal of oxygen from cathode flow path 23 produces nitrogen-enriched air exiting the region of the cathode 14.

As discussed above, the electrolysis reaction occurring at the positively charged anode 16 requires water, and the ionic polymers used for a PEM electrolyte perform more effectively in the presence of water. Accordingly, in some embodiments, a PEM membrane electrolyte is saturated with water or water vapor. Although the reactions (1a-b) and (2) are stoichiometrically balanced with respect to water so that there is no net consumption of water, in practice some amount of moisture will be removed through the cathode exhaust 24 and/or the anode exhaust 26 (either entrained or evaporated into the exiting gas streams). Accordingly, in some exemplary embodiments, water from a water source is circulated past the anode 16 along an anode fluid flow path (and optionally also past the cathode 14) and recycled to the anode 16. Such water circulation can also provide cooling for the electrochemical cells. In some exemplary embodiments, water can be provided at the anode from humidity in air along an anode fluid flow path in fluid communication with the anode. In other embodiments, the water produced at cathode 14 can be captured and recycled to anode 16 (e.g., through a water circulation loop, not shown). It should also be noted that, although the embodiments are contemplated where a single electrochemical cell is employed, in practice multiple electrochemical cells will be electrically connected in series with fluid flow to the multiple cathode and anode flow paths routed through manifold assemblies.

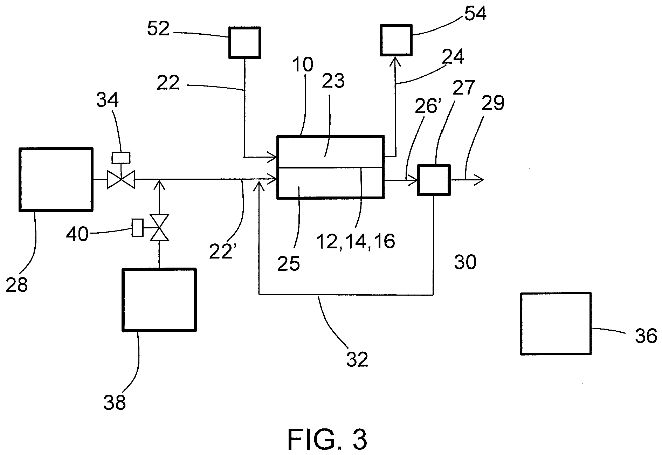

An example embodiment of an inerting gas generating system that can be used as an on-board aircraft inerting system with an electrochemical cell 10 is schematically shown in FIG. 3. As shown in FIG. 3, water from a process water source 28 is directed (e.g., by a pump, not shown) through a flow control valve 34 along the anode supply fluid flow path 22' to the anode fluid flow path 25, where can be electrolyzed at the anode 16 to form protons, and oxygen. Fuel from a fuel source 38 is directed (e.g., by a pump, not shown) through a flow control valve 40 along the anode supply fluid flow path 22' to the anode fluid flow path 25, where it can form protons at the anode 16 according to the formulae above. The protons are transported across the separator 12 to the cathode 14, where they combine with oxygen from airflow along the cathode fluid flow path 23 to form water. In electrolysis mode, removal of the protons from the anode fluid flow path 25 leaves oxygen gas on the anode fluid flow path, which is discharged as anode exhaust 26 to a fluid flow path 26'. In fuel cell mode, removal of the protons from the anode fluid flow path 25 leaves carbon dioxide gas on the anode fluid flow path, which is discharged as anode exhaust 26 to a fluid flow path 26'. As further shown in FIG. 3, the fluid flow path 26' includes a gas-liquid separator 27 and a flow control valve 30. Although water is consumed at the anode by electrolysis, the fluid exiting as anode exhaust 26 can include gaseous oxygen and water vapor, which is separated as a gas stream 29 that can be exhausted to atmosphere or can be used for other applications such as an oxygen stream directed to aircraft occupant areas, occupant breathing devices, an oxygen storage tank, or an emergency aircraft oxygen breathing system. The gas-liquid separator 27 can include a tank with a liquid space and a vapor space inside, allowing for liquid water to be removed from the liquid space and transported back to the electrochemical cell 10 through anode return conduit 32. Additional gas-liquid separators can be used such as a coalescing filter, vortex gas-liquid separator, or membrane separator.

As further shown in FIG. 3, the electrochemical cell or cell stack 10 generates an inerting gas on the cathode fluid flow path 23 by producing oxygen-depleted air (ODA, also known as nitrogen-enriched air (NEA) at the cathode 14 that can be directed to a protected space 54 (e.g., a fuel tank ullage space, a cargo hold, or an equipment bay). As shown in FIG. 3, an air source 52 (e.g., ram air, compressor bleed, blower) is directed to the cathode fluid flow path 23 where oxygen is depleted by reaction with protons that have crossed the separator 12 to form water at the cathode 14. The ODA thereby produced can be directed to a protected space 54 such as an ullage space in in the aircraft fuel tanks as disclosed or other protected space 54. The inerting gas flow path (cathode exhaust 24) can include additional components (not shown) such as flow control valve(s), a pressure regulator or other pressure control device, and water removal device(s) such as a heat exchanger condenser, a membrane drier, or other water removal device(s). Additional information regarding the electrochemical production of ODA can be found in U.S. Patent 9,941,526, US Patent Application Publication No. 2017/0131131A1, and US Patent Application Serial No. 16/023,024, the disclosures of each of which are incorporated herein by reference in their entirety.

As mentioned above, the electrochemical cell can be used to in an alternate mode to provide electric power for on-board power-consuming systems, as disclosed in the aforementioned US Patent Application Publication No. 2017/0131131A1. In this mode, fuel (e.g., hydrogen) is directed from the fuel source 38 to the anode 16 where protons are formed and are transported across the separator 12 to combine with oxygen at the cathode, thereby producing electricity (and ODA at the cathode 14). Embodiments in which these alternate modes of operation can be utilized include, for example, operating the system in a first mode of water electrolysis (either continuously or at intervals) under normal aircraft operating conditions (e.g., in which an engine-mounted generator provides electrical power) and operating the system in a second mode of electrochemical electricity production in response to a demand for emergency electrical power (e.g., failure of an engine-mounted generator). ODA can be produced at the cathode 14 in each of these alternate modes of operation. Of course, system operation is not limited to the first and second modes discussed above, and other modes of operation can be included for selection. Examples of additional modes of operation include but are not limited to start-up mode(s), shut-down mode(s), and stand-by or suspend mode(s).

The control of water and/or fuel flow to the anode fluid flow supply path 22' can be controlled by the control valves 34 and 40. The fuel from the fuel source 38 (e.g., fuel storage tank) can be metered by the flow control valve 34 for delivery to the anode fluid flow path 25 at a desired ratio of fuel and water. The inerting gas generation system such as shown in FIGS. 2 and 3 can include sensors for measuring any of the above-mentioned fluid flow rates, temperatures, oxygen levels, humidity levels, or current or voltage levels, as well as controllable output fans or blowers, or controllable fluid flow control valves or gates. These sensors and controllable devices can be operatively connected to the controller 36, which can be an independent controller dedicated to controlling the inert gas generating system or the electrochemical cell, or can interact with other onboard system controllers or with a master controller. In some embodiments, data provided by the controller of the inert gas management system can come directly from a master controller.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an", "the", or "any" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for providing inerting gas to a protected space and electrical power, comprising
an electrochemical cell (10) comprising a cathode (14) and an anode (16) separated by a separator (12) comprising a proton transfer medium;
a cathode fluid flow path (23) in operative fluid communication with the cathode between a cathode fluid flow path inlet and a cathode fluid flow path outlet;
an anode fluid flow path (25) in operative fluid communication with the anode between an anode fluid flow path inlet and an anode fluid flow path outlet;
an air source in operative fluid communication with the cathode fluid flow path inlet, and an inerting gas flow path in operative fluid communication with the cathode fluid flow path outlet and the protected space;
a water source (28) in controllable operative fluid communication with the anode fluid flow path inlet, and a fuel source (38) in controllable operative fluid communication with the anode fluid flow path inlet;
an electrical connection in controllable communication between the electrochemical cell (10) and a power sink (21), and between the electrochemical cell and a power source;
an oxygen evolution reaction catalyst and a hydrogen oxidation reaction catalyst at the anode; and
a controller (36) configured to alternatively operate the system in alternate modes of operation selected from a plurality of modes including:
a first mode in which water is directed to the anode fluid flow path inlet, electric power is directed from the power source to the electrochemical cell to provide a voltage difference between the anode and the cathode, and an inerting gas is directed from the cathode fluid flow path outlet to the protected space, and
a second mode in which the fuel is directed from the fuel source to the anode fluid flow path inlet and electric power is directed from the electrochemical cell to the power sink.

2. The system of claim 1, wherein the cathode fluid flow path outlet is in operative fluid communication with the protected space in the second mode of operation.

3. The system of claim 1 or 2, wherein the oxygen evolution reaction catalyst includes a non-oxide metal, or wherein the oxygen evolution reaction catalyst includes a metal oxide, and preferably wherein the metal oxide includes an oxide of a metal selected from iridium, ruthenium, nickel, platinum, lead, manganese oxide, titanium, cobalt(II,III), or iron(II,III), or combinations thereof; or
wherein the oxygen evolution reaction catalyst is selected from iridium oxide, ruthenium oxide, nickel oxide, platinum oxide, lead oxide, manganese oxide, titanium oxide, cobalt(II,III) oxide, iron(II,III) oxide, or combinations thereof, or wherein the oxygen evolution reaction catalyst is selected from Ru02/Ir02, Pt-Ir02 nickel/iron, nickel/nickel oxide.

4. The system of any preceding claim, wherein the hydrogen oxidation reaction catalyst includes platinum, ruthenium, palladium, or combinations thereof, or wherein the hydrogen oxidation reaction catalyst includes a nanoparticle morphology.

5. The system of any preceding claim, wherein the catalysts at the anode are unsupported.

6. The system of any of claims 1 to 4, wherein the catalysts at the anode are supported on a metal oxide.

7. The system of any preceding claim, wherein the oxygen evolution reaction catalyst and the hydrogen oxidation reaction catalyst are disposed at different regions of the anode.

8. The system of any of claims 1 to 7, wherein the oxygen evolution reaction catalyst and the hydrogen oxidation reaction catalyst are intermixed at the anode.

9. The system of any preceding claim, further comprising a liquid-gas separator including an inlet in operative fluid communication with the anode fluid flow path outlet and a liquid outlet in operative fluid communication with the anode fluid flow path inlet.

10. The system of claim 9, wherein the system is disposed on-board an aircraft, and the liquid-gas separator includes a gas outlet in operative fluid communication with a pressurized area of the aircraft or an occupant breathing system.

11. The system of any preceding claim, wherein the system is disposed on-board an aircraft.

12. The system of claim 11, wherein the controller is configured to operate the system in the first mode continuously or at intervals under normal aircraft operating conditions, and to operate the system in the second mode in response to a demand for emergency electrical power.

13. A method of producing inert gas and generating electrical power with an electrochemical cell comprising an anode and a cathode separated by a separator comprising a proton transfer medium, the method comprising:
operating the electrochemical cell in a first mode comprising electrolyzing water at the anode with an oxygen evolution reaction catalyst to form protons and oxygen, transporting the protons across the separator to the cathode, reacting the protons with oxygen at the cathode, and discharging an inerting gas depleted of oxygen from the cathode, and
operating the electrochemical cell in a second mode comprising producing protons and electrons from a fuel at the anode with a hydrogen oxidation reaction catalyst, transporting the protons across the separator to the cathode, and transporting electrons to the cathode through an electrical circuit to produce electrical power.

14. The method of claim 13, further comprising discharging an inerting gas depleted of oxygen from the cathode in the second mode of operation.

15. The method of claim 14, further comprising operating the system on-board an aircraft and directing oxygen discharged from the anode to a pressurized area of the aircraft or to an occupant breathing system.
